# FASCICULE DE BREVET EUROPEEN

(11) **EP 1 026 960 B1**
(45) Date de publication et mention de la délivrance du brevet: **28.08.2002**
(21) Numéro de dépôt: 98949070.1
(22) Date de dépôt: 16.10.1998
(51) Int. Cl.: A23L 1/0534

(54) **UTILISATION DE MICROFIBRILLES DE CELLULOSE SOUS FORME SECHE DANS DES FORMULATIONS ALIMENTAIRES**
VERWENDUNG VON MIKROFIBRILLIERTER CELLULOSE IN TROCKENER FORM IN LEBENSMITTELN
USE OF CELLULOSE MICROFIBRILS IN DRY FORM IN FOOD FORMULATIONS

(30) Priorité: 29.10.1997 FR 9713560
(43) Date de publication de la demande: 16.08.2000
(73) Titulaire: RHODIA CHIMIE, 92408 Courbevoie Cédex (FR)
(72) Inventeur: CANTIANI, Robert, F-69006 Lyon (FR); KNIPPER, Magali, F-75019 Paris (FR); VASLIN, Sophie, F-92210 Saint-Cloud (FR)
(74) Mandataire: Dubruc, Philippe
(86) Numéro de dépôt international: FR9802228
(87) Numéro de publication internationale: WO99021435

(56) Documents cités:
- EP-A- 0 120 471
- EP-A- 0 537 554
- EP-A- 0 726 356
- WO-A-95/02966
- WO-A-98/02487
- US-A- 4 659 388
- US-A- 5 342 636
- US-A- 5 487 419

## Description

La présente invention a pour objet l'utilisation, sous forme sèche, de microfibrilles de cellulose associées à au moins un composé polyhydroxylé, en tant qu'additif comme agent de frisonnement dans des formulations alimentaires.

La cellulose microfibrillée est un produit bien connu et employé dans de nombreux domaines, tels que les domaines de l'alimentaire, car il confère aux milieux dans lesquels il est présent, des propriétés particulières en terme de viscosité, de stabilité, par exemple.

En général, les microfibrilles de cellulose sont mises en oeuvre sous la forme de dispersions, qui correspondent, en fait, à la forme dans lesquelles on les obtient en mettant en oeuvre les opérations de fibrillation.

Ainsi, le brevet européen EP 295 865 propose d'utiliser des suspensions de microfibrilles de cellulose à cellules de parenchyme, comme additif pour formulations alimentaires. Ces microfibrilles sont obtenues en mettant en oeuvre un procédé consistant à traiter dans une première étape, la pulpe de végétaux à un pH acide ou basique, puis dans une seconde étape d'effectuer un traitement thermique à température élevée pendant une durée courte. La pulpe ainsi traitée est alors soumise à un cisaillement mécanique de manière à obtenir des microfibrilles, qui sont par la suite séparées, et éventuellement blanchies. Ce procédé présente la particularité d'éliminer totalement les pectines et les hémicelluloses présentes à la surface des microfibrilles.

Dans la demande de brevet européen EP 726 356, il a été prcposé, entre autres, d'employer comme additif dans des formulations alimentaires, des microfibrilles de cellulose essentiellement amorphes, dont la surface est chargée en acides carboxyliques.

Si l'intérêt des microfibrilles n'est évidemment pas remis en cause ici, le fait de les utiliser sous la forme de dispersions peu concentrées (classiquement moins de 10 % en poids sec de microfibrilles) ne représente pas un avantage en ce qui conceme le stockage (emplacement, stabilité de la suspension), voire l'utilisation (dosage).

Or, les microfibrilles ne sont pas des composés que l'on peut sécher sans précautions particulières. Si tel est le cas, les microfibrilles se présentant sous forme sèches ne sont pas redispersables, du fait des liaisons hydrogène très fortes qui lient les fibrilles entre elles.

Il est donc connu de mettre en oeuvre le séchage desdites microfibrilles en présence d'additifs. Cependant, les quantités généralement mises en oeuvre sont très élevées. Il n'est pas rare que ces teneurs représentent au moins 50 %, voire 100 % en poids par rapport au poids de microfibrilles.

Ceci peut être désavantageux, notamment pour les microfibrilles de cellulose possédant des propriétés rhéologiques particulières, différentes de celles de l'additif ajouté. En effet, l'additif introduit dans de telles quantités masque en quelque sorte le profil rhéologique des microfibrilles.

Comme on peut le constater, on ne dispose pas à l'heure actuelle de formulations alimentaires obtenues à partir de microfibrilles de cellulose sous forme sèche qui soient facilement redispersables.

Ainsi, la présente invention a pour objet l'utilisation, sous forme sèche, d'une association de microfibrilles de cellulose essentiellement amorphes présentant un taux de cristallinité inférieur ou égal à 50 %, avec au moins un composé polyhydroxylé, comme additif pour des formulations alimentaires, la teneur en cette association étant supérieure à 0 % et inférieure à 20 % en poids par rapport au poids total de la formulation alimentaire.

On a constaté que les microfibrilles de cellulose associées, sous forme sèche, mises en oeuvre selon l'invention, sont tout d'abord facilement redispersables. Par facilement, on entend qu'il n'est pas nécessaire de mettre en oeuvre des moyens extrêmement cisaillants comme ceux résultant de l'emploi d'un appareil de type Ultra Turrax.

En outre, les microfibrilles associées, sous forme sèches, une fois redispersées, retrouvent au moins 50 % de leur viscosité initiale.

Par ailleurs, on a trouvé que les microfibrilles associées, séchées, présentent de très bonnes propriétés de texturation, c'est-à-dire qu'elles ont dans la formulation dans laquelle elle sont introduites, un double rôle de stabilisant et d'épaississant.

Le microfibrilles de cellulose associées, séchées, peuvent en outre valablement remplacer au moins en partie des matières grasses pour la préparation de formulations allégées.

II est à noter que les caractéristiques organoleptiques des microfibrilles de cellulose associées, séchées, sont telles qu'elles confèrent à la formulation une consistance, une onctuosité voisines des produits qu'elles remplacent.

Les microfibrilles de cellulose associées, séchées, présentent de même de remarquables propriétés foisonnantes. En d'autres termes, l'incorporation de microfibrilles associées confère aux formulations foisonnées, une stabilité et une élasticité de la mousse très importantes.

Les microfibrilles associées, séchées, présentent de même l'avantage de remplacer un ou plusieurs produits, ce qui simplifie la mise en oeuvre de la formulation.

En outre, les quantités de microfibrilles associées, séchées, par rapport à l'additif ou aux additifs qu'elles remplacent, sont plus faibles.

Il est à noter que les microfibrilles associées, séchées, peuvent être utilisées en tant que substitut de la gélatine animale, le plus souvent d'origine bovine, ce qui représente un avantage non négligeable sur le plan de la santé.

D'autres avantages et caractéristiques de la présente invention apparaîtront plus clairement à la lecture de la description et des exemples qui vont suivre.

Comme cela a été indiqué auparavant, la présente invention a pour objet l'utilisation, sous forme sèche, d'une association de microfibrilles de cellulose essentiellement amorphes avec au moins un composé polyhydroxylé, comme agent de foisonnement pour des formulations alimentaires.

Par essentiellement amorphes, on entend des microfibrilles dont le taux de cristallinité est inférieur ou égal à 50 %. Selon une variante particulière de la présente invention, le taux de cristallinité est compris entre 15 % et 50 %. De préférence, le taux de cristallinité est inférieur à 50 %.

Les microfibrilles de cellulose entrant dans la composition de la formulation selon la présente invention sont issues de cellules constituées, de préférence, d'au moins environ 80% de parois primaires. On a de telles caractéristiques avec de la cellulose à base de cellules de parenchyme. Par exemple, les citrus, comme les citrons, pamplemousses notamment, ou encore la betterave sucrière, sont des végétaux comprenant de telles cellules.

De préférence, la quantité de parois primaires est d'au moins 85 % en poids. Plus particulièrement, on met en oeuvre de la cellulose issue de la pulpe de betterave sucrière.

Selon un mode de réalisation préféré de l'invention, les microfibrilles sont chargées en surface en acides carboxyliques et en polysaccharides acides, seuls ou en mélange.

Par acides carboxyliques, on entend les acides carboxyliques simples, ainsi que leurs sels. Ces acides sont de préférence choisis parmi les acides uroniques, ou leurs sels. Plus particulièrement, lesdits acides uroniques sont l'acide galacturonique, l'acide glucuronique, ou leurs sels.

En tant que polysaccharides acides, on peut citer les pectines, qui sont plus particulièrement des acides polygalacturoniques. Ces polysaccharides acides peuvent être présents en mélange avec des hémicelluloses.

Un mode de réalisation très avantageux de l'invention est constitué par des microfibrilles dont la surface est au moins chargée en acide galacturonique et/ou en acide polygalacturonique.

Il est à noter qu'il ne s'agit pas ici d'un simple mélange entre lesdites microfibrilles et les acides et polysaccharides, mais plutôt d'une combinaison étroite entre ces deux types de composés. En effet, le procédé de préparation des microfibrilles est tel que les acides et polysaccharides ne sont pas totalement séparés des fibres mais restent encore en surface de ces dernières, leur conférant des propriétés bien spécifiques. Ainsi, on a constaté qu'il n'était pas possible d'obtenir les mêmes propriétés si ces acides et/ou polysaccharides étaient totalement séparés des microfibrilles lors de leur préparation pour leur être rajoutés par la suite.

Les microfibrilles de cellulose présentent par ailleurs, une section comprise entre environ 2 et environ 10 nm. Plus particulièrement, la section des microfibrilles est comprise entre environ 2 et environ 4 nm.

Les microfibrilles particulières entrant dans la composition de formulations alimentaires présentent de telles caractéristiques du fait de la mise en oeuvre d'un procédé de préparation bien particulier, qui va maintenant être décrit.

Il est à noter que ce procédé fait entre autres l'objet de la demande de brevet EP 726 356, à laquelle on pourra se référer pour plus de détails.

Tout d'abord, ledit procédé est plus particulièrement effectué sur de la pulpe de betterave sucrière après que celle-ci a subi une étape d'extraction préalable du saccharose, selon les méthodes connues de la technique.

Le procédé de préparation comprend les étapes suivantes :
(a) première extraction acide ou basique, à l'issue de laquelle on récupère un premier résidu solide,
(b) éventuellement seconde extraction effectuée dans des conditions alcalines du premier résidu solide, à la suite de quoi, est récupéré un second résidu solide,
(c) lavage du premier ou du second résidu solide,
(d) éventuellement blanchiment du résidu lavé,
(e) dilution du troisième résidu solide obtenu à l'issue de l'étape (d) de manière à obtenir un taux de matières sèches compris entre 2 et 10 % en poids,
(f) homogénéisation de la suspension diluée.

Dans l'étape (a), on entend par "pulpe" de la pulpe humide, déshydratée, conservée par ensilage ou partiellement dépectinée.

L'étape d'extraction (a) peut être effectuée en milieu acide ou en milieu basique.

Pour une extraction acide, la pulpe est mise en suspension dans une solution d'eau pendant quelques minutes de façon à homogénéiser la suspension acidifiée à un pH compris entre 1 et 3, de préférence entre 1,5 et 2,5.

Cette opération est mise en oeuvre avec une solution concentrée d'un acide tel que l'acide chlorhydrique ou l'acide sulfurique.

Cette étape peut être avantageuse pour éliminer les cristaux d'oxalate de calcium qui peuvent être présents dans la pulpe, et qui, du fait de leur caractère abrasif important, peuvent causer des difficultés dans l'étape d'homogénéisation.

Pour une extraction basique, la pulpe est ajoutée à une solution alcaline d'une base, par exemple de la soude ou de la potasse, de concentration inférieure à 9 % en poids, plus particulièrement inférieure à 6 % en poids. De préférence, la concentration de la base est comprise entre 1 et 2 % en poids.

On pourra ajouter une faible quantité d'un agent antioxydant soluble dans l'eau, tel que le sulfite de sodium Na₂SO₃, afin de limiter les réactions d'oxydation de la cellulose.

L'étape (a) est effectuée en général à une température comprise entre environ 60°C et 100°C, de préférence comprise entre environ 70°C et 95°C.

La durée de l'étape (a) est comprise entre environ 1 heure et environ 4 heures.

Lors de l'étape (a), il se produit une hydrolyse partielle avec libération et solubilisation de la majeure partie des pectines et des hémicelluloses, tout en préservant la masse moléculaire de la cellulose.

Le résidu solide est récupéré à partir de la suspension provenant de l'étape (a) en mettant en oeuvre des méthodes connues. Ainsi, il est possible de séparer le résidu solide par centrifugation, par filtration sous vide ou sous pression, avec les toiles filtrantes, ou les filtres-presses par exemple, ou encore par évaporation.

On soumet éventuellement le premier résidu solide obtenu à une seconde étape d'extraction, effectuée dans des conditions alcalines.

On met en oeuvre une seconde étape d'extraction lorsque la première a été conduite dans des conditions acides. Si la première extraction a été effectuée dans des conditions alcalines, la seconde étape n'est que facultative.

Selon le procédé, cette seconde extraction est effectuée avec une base de préférence choisie parmi la soude ou la potasse, dont la concentration est inférieure à environ 9 % en poids, de référence comprise entre environ 1 % et environ 6 % en poids.

La durée de l'étape d'extraction alcaline est comprise entre environ 1 et environ 4 heures. Elle est de préférence égale à environ 2 heures.

A l'issue de cette seconde extraction, si elle a lieu, on récupère un second résidu solide.

Dans l'étape (c) le résidu provenant de l'étape (a) ou (b) est lavé abondamment à l'eau afin de récupérer le résidu de matériau cellulosique.

Le matériau cellulosique de l'étape (c) est ensuite facultativement blanchi, dans l'étape (d), selon les méthodes classiques. Par exemple, on peut effectuer un traitement au chlorite de sodium, à l'hypochlorite de sodium, au peroxyde d'hydrogène à raison de 5-20 % par rapport à la quantité de matières sèches traitée.

Différentes concentrations d'agent de blanchiment peuvent être utilisées, à des températures comprises entre environ 18°C et 80°C, de préférence entre environ 50°C et 70°C.

La durée de cette étape (d) est comprise entre environ 1 heure et environ 4 heures, de préférence entre environ 1 et environ 2 heures.

On obtient alors un matériau cellulosique contenant entre 85 et 95 % en poids de cellulose.

A l'issue de cette étape de blanchiment, il peut être préférable de laver abondamment la cellulose avec de l'eau.

La suspension résultante, éventuellement blanchie, est ensuite rediluée dans de l'eau à raison de 2 à 10 % de matières sèches, puis subit une étape d'homogénéisation.

Celle-ci correspond à un mixage, broyage ou toute opération de cisaillement mécanique élevé, suivie d'un ou plusieurs passages de la suspension de cellules à travers un orifice de petit diamètre, soumettant la suspension à une chute de pression d'au moins 20 MPa et à une action de cisaillement à vitesse élevée suivie d'un impact de décélération à vitesse élevée.

Le mixage ou broyage est, par exemple, effectué par passage(s) au mixeur ou broyeur pendant une durée allant de quelques minutes à environ une heure, dans un appareil de type tel un WARING BLENDOR équipé d'une hélice à quatre pales ou broyeur à meule ou tout autre type de broyeur, tel un broyeur colloïdal.

L'homogénéisation proprement dite sera avantageusement effectuée dans un homogénéiseur du type MANTON GAULIN dans lequel la suspension est soumise à une action de cisaillement à vitesse et à pression élevées dans un passage étroit et contre un anneau de choc. On peut aussi citer le MICRO FLUIDIZER qui est un homogénéiseur principalement constitué d'un moteur à air comprimé qui crée de très fortes pressions, d'une chambre d'interaction dans laquelle s'effectue l'opération d'homogénéisation (cisaillement élongationnel, chocs et cavitations) et d'une chambre basse pression qui permet la dépressurisation de la dispersion.

La suspension est introduite dans l'homogénéiseur de préférence après préchauffage à une température comprise entre 40 et 120°C, de préférence comprise entre 85 et 95°C.

La température de l'opération d'homogénéisation est maintenue entre 95 et 120°C, de préférence supérieure à 100°C.

La suspension est soumise dans l'homogénéiseur à des pressions comprises entre 20 et 100 MPa, et de préférence supérieures à 50 MPa.

L'homogénéisation de la suspension cellulosique est obtenue par un nombre de passages pouvant varier entre 1 et 20, de préférence entre 2 et 5, jusqu'à obtention d'une suspension stable.

L'opération d'homogénéisation peut avantageusement être suivie d'une opération de cisaillement mécanique élevé, par exemple dans un appareil tel l'ULTRA TURRAX de SYLVERSON.

Les microfibrilles de cellulose selon l'invention sont associées à au moins un composé polyhydroxylé.

Plus particulièrement, le composé polyhydroxylé est choisi parmi les carbohydrates et leurs dérivés, et les polyols.

En ce qui conceme les carbohydrates, on peut tout particulièrement citer les monosaccharides linéaires ou cycliques en C₃-C₆, et de préférence en C₅ ou C₆, les oligosaccharides, les polysaccharides et leurs dérivés gras comme les sucroesters ou sucroesters d'acides gras, les carbohydrates alcool et leurs mélanges.

A titre d'exemples non limitatifs des monosaccharides, conviennent le fructose, le mannose, le galactose, le glucose, le talose, le gulose, l'allose, l'altrose, l'idose, l'arabinose, le xylose, le lyxose et le ribose.

A titre d'oligosaccharides, on peut mentionner entre autres, le saccharose, le maltose et le lactose.

Les polysaccharides peuvent être d'origine animale, végétale ou encore bactérienne.

En outre, ils peuvent être mis en oeuvre sous une forme anionique ou non ionique.

La gomme xanthane, les succinoglycanes, les carraghénanes, les alginates sont des éléments représentatifs des polysaccharides anioniques.

Pour ce qui a trait aux polysaccharides non ioniques, on peut citer notamment les galactomannannes, comme la gomme de guar, la gomme de caroube, l'amidon et ses dérivés non ioniques, les dérivés non ioniques de la cellulose.

Quant aux dérivés des carbohydrates, on peut mentionner sans intention de s'y limiter, les sucroesters d'acides gras, les esters d'acides gras, les carbohydrates d'alcools de type sorbitol, mannitol ; les carbohydrates d'acides comme l'acide gluconique, les acides uroniques, tels que l'acide galacturonique, l'acide glucuronique, ainsi que leurs sels, et les carbohydrates d'éthers comme la cellulose carboxyméthylée.

En ce qui concerne les polyols, on peut mettre en oeuvre dans les formulations alimentaires, du glycérol, du pentaérythritol, du propylèneglycol, de l'éthylène glycol et/ou des alcools polyvinyliques.

Il est à noter que les composés précédemment décrits peuvent être utilisés seuls ou en mélange.

Selon une première variante particulièrement avantageuse, le composé polyhydroxylé est au moins de la cellulose carboxyméthylée.

La cellulose est un polymère constitué d'unités monomériques de glucose. Le groupement carboxylé est introduit de manière connue en soi, en faisant réagir l'acide chloro-acétique avec la cellulose.

Le degré de substitution correspond au nombre de groupements carboxyméthylés par unité de glucose. Le degré théorique maximal est de 3.

Selon que le degré de substitution est supérieur à 0,95, ou inférieur ou égal à cette valeur, on précise que la cellulose carboxyméthylée est, respectivement, à haut ou à bas degré de substitution.

Selon une seconde variante, le composé polyhydroxylé est une combinaison de cellulose carboxyméthylée avec l'un au moins des composés choisis parmi les monosaccharides, oligosaccharides, les polysaccharides non ioniques et anioniques et leur dérivés, les dérivés des carbohydrates comme les carbohydrates d'alcools, d'acides et d'éthers.

En particulier, la cellulose carboxyméthylée est mise en oeuvre en combinaison avec l'un au moins des composés suivants : la gomme xanthane, le sorbitol, le saccharose.

La teneur totale en composé polyhydroxylé est d'au moins 5 % en poids par rapport au microfibrilles et audit composé polyhydroxylé, et d'au plus 50 % en poids par rapport à la même référence.

De préférence, cette teneur est comprise entre 5 et 30 % en poids par rapport à la même référence. De manière tout à fait avantageuse, la teneur est comprise entre 10 et 30% et de préférence entre 15 et 30 % en poids.

Eventuellement, outre le composé polyhydroxylé précité, les microfibrilles de cellulose peuvent être associées avec au moins un co-additif choisi parmi:
- les composés de formule (R¹R²N)COA, formule dans laquelle R¹ ou R², identiques ou différents, représentent l'hydrogène ou un radical alkyle en C₁-C₁₀, de préférence en C₁-C₅, A représente l'hydrogène, un radical alkyle en C₁-C₁₀, de préférence en C₁-C₅, ou encore le groupement R'¹R'²N avec R'¹, R'², identiques ou différents, représentant l'hydrogène ou un radical alkyle en C₁-C₁₀, de préférence en C₁-C₅,

En ce qui concerne les composés du type (R¹R²N)COA, on préfère utiliser les composés comprenant deux fonctions amides. De préférence on utilise l'urée comme co-additif.

Les microfibrilles de cellulose entrant dans la composition des formulations alimentaires, sont issues du séchage d'une dispersion de microfibrilles en présence d'un additif et éventuellement d'un co-additif.

Il est de même envisageable de mettre en oeuvre une dispersion d'une telle composition.

De telles compositions ont notamment fait l'objet des demandes de brevets PCT/FR97/01290 publiée sous le numéro WO 98/02486 et PCT/FR97/01291 publiée sous le numéro WO 98/02487 ; brevets auxquels on pourra se référer pour ce qui conceme la nature des additifs, co-additifs et combinaisons préférées, les proportions respectives des additifs et co-additifs, ainsi que leur mode de préparation.

La teneur en co-additif est telle que la teneur totale en composé polyhydroxylé et en co-additif est d'au moins 5 % en poids par rapport au microfibrilles et audit composé polyhydroxylé, et d'au plus 50 % en poids par rapport à la même référence.

De préférence, ladite teneur en co-additif est telle que la teneur totale précitée est comprise entre 5 et 30 % en poids. De manière tout à fait avantageuse, la teneur est comprise entre 10 et 30% et de préférence entre 15 et 30 % en poids.

Le procédé de préparation de telles compositions de microfibrilles consiste, tout d'abord, à préparer les microfibrilles de cellulose à partir de pulpe cellulosique appropriée en effectuant une hydrolyse puis éventuellement au moins une étape de blanchiment de la pulpe ainsi traitée. Ce qui a été indiqué auparavant à ce propos reste valable et ne sera pas repris ici.

Plus particulièrement, dans une première étape, on ajoute à la suspension de microfibrilles, éventuellement ayant subi au moins un cycle d'homogénéisation, au moins une partie de l'additif et éventuellement du ou des co-additifs. Puis, dans une seconde étape, on met en oeuvre une étape de séchage de la suspension ainsi additivée.

Selon une première variante, l'addition d'au moins une partie de l'additif et éventuellement du co-additif, est effectuée à l'issue de l'étape d'homogénéisation.

Une première méthode particulièrement appropriée, consiste à ajouter au moins une partie de l'additif et éventuellement du co-additif, à la suspension à l'issue de l'étape d'homogénéisation, après que cette demière a subi au moins une étape de concentration.

A titre indicatif, la ou les étapes de concentration ont lieu par filtration, centrifugation, ou encore évaporation d'une partie de l'eau de la suspension, par précipitation, par exemple dans un alcool, par congélation - décongélation, par dialyse, etc.

Selon ce mode de réalisation, l'opération de concentration peut être conduite jusqu'à obtenir un extrait sec d'environ 35 % en poids.

L'introduction de l'additif et éventuellement du co-additif est effectuée de manière connue en soi, c'est-à-dire par tout moyen permettant d'introduire de manière homogène une solution, une suspension ou une poudre, à une suspension qui a plutôt la consistance d'une pâte. Par exemple, on peut citer les broyeurs, les extrudeurs, les malaxeurs.

Cette opération peut être effectuée dans une large gamme de température, comprise plus particulièrement entre la température ambiante et 80°C.

Une seconde méthode à ajouter au moins une partie de l'additif et éventuellement du co-additif, à la suspension à l'issue de l'étape d'homogénéisation, avant que cette dernière ait subi au moins une étape de concentration.

Dans ce cas, l'étape ou les étapes de concentration qui ont lieu après l'ajout d'additif et éventuellement du co-additif, sont effectuées de la même manière que précédemment indiqué.

Selon une deuxième variante avantageuse, l'introduction d'au moins une partie de l'additif et éventuellement du co-additif est effectuée avant ou pendant l'étape d'homogénéisation. Lorsqu'il est indiqué que l'additivation a lieu pendant l'étape d'homogénéisation, on entend que l'additif et éventuellement le co-additif sont introduits alors que la pulpe a subi au moins un cycle de l'étape d'homogénéisation.

L'additivation a lieu selon les deux méthodes indiquées dans le cadre de la première variante.

Préalablement à l'étape de séchage proprement dite, il peut être avantageux d'effectuer une mise en forme de la suspension qui a été concentrée comme mentionné auparavant. Cette mise en forme est réalisée de manière connue de l'homme du métier. On peut notamment citer, sans intention de s'y limiter toutefois, l'extrusion, la granulation.

Selon une variante particulièrement avantageuse, on effectue l'étape de séchage de manière à maintenir au minimum 3 % en poids d'eau par rapport au poids du solide obtenu. Plus particulièrement, le poids d'eau maintenu est compris entre 10 et 30% en poids.

Le séchage a lieu de manière avantageuse sous air, bien qu'il soit envisageable de mettre en oeuvre sous un gaz inerte, comme l'azote.

Il est en outre à noter que l'on préfère mettre en oeuvre le séchage sous une atmosphère dont le degré d'humidité est contrôlé de manière à pouvoir maintenir le taux d'humidité souhaité dans la composition.

La température de séchage doit limiter toute dégradation des acides carboxyliques, des polysaccharides acides, des hémicelluloses et/ou des additifs et co-additifs. Elle est plus particulièrement comprise entre 30 et 80°C, de préférence entre 30 et 60°C.

Il est à noter que l'on ne sortirait pas du cadre de la présente invention en mettant en oeuvre un séchage en plusieurs étapes, dont certaines d'entre elles mettraient en oeuvre les moyens indiqués précédemment pour l'étape de concentration.

A l'issue de l'étape de séchage, on peut effectuer un broyage de la composition obtenue.

La teneur en microfibrilles de cellulose, comprenant le composé polyhydroxylé, et éventuellement le co-additif, est supérieure à 0 % et inférieure ou égale à 20 % en poids par rapport au poids total de la formulation alimentaire. Plus particulièrement, cette teneur est comprise entre 0,01 et 5 % en poids par rapport à la même référence. De préférence, elle est comprise entre 0,03 et 3 % en poids par rapport à la même référence.

Les formulations alimentaires dans lesquelles sont ajoutées les microfibrilles associées sont classiquement des dispersions. Par dispersions, on désigne des émulsions de liquides, des émulsions de gaz et de liquides, des suspensions de liquides et de solides, ou tout autre système combinant ces possibilités.

Les formulations alimentaires sont obtenues très simplement, en mettant en oeuvre les méthodes classiques de préparation des formulations alimentaires selon leur type. Ainsi, les microfibrilles associées, sous forme séchée, sont mélangées aux autres ingrédients nécessaires de la formulation, puis l'ensemble est homogénéisé.

La température à laquelle est préparée la formulation ne présente pas de problème particulier. Il est à noter à ce sujet que, de manière avantageuse, les formulations comprenant les microfibrilles associées peuvent être stérilisées sans aucun dommage pour leur propriétés d'usage. Un autre avantage des microfibrilles de cellulose associées selon l'invention est qu'il est possible de préparer les formulations alimentaires sans avoir à chauffer au préalable les ingrédients.

Il est par ailleurs précisé que les microfibrilles de cellulose sont compatibles et conservent substantiellement leurs propriétés malgré la diversité des formulations alimentaires (pH, forces ioniques, composition).

Les paramètres mesurables pour déterminer la texture des formulations alimentaires sont de nature rhéologique, et consistent à mesurer essentiellement la viscosité et l'élasticité. La viscosité correspond à résistance à l'écoulement sous une déformation irréversible, et l'élasticité est la réponse de la formulation à une déformation réversible. lls permettent en outre de donner des indications sur la stabilité des formulations, ce qui est particulièrement recherché, notamment dans le cas où la formulation renferme au moins deux éléments qui ne sont pas miscibles entre eux. Ainsi, une viscosité élevée ralentit certains phénomènes de déstabilisation des émulsions, comme le crémage et la floculation. Une valeur élevée de l'élasticité, qui représente le résultat structurel d'interactions entre les divers éléments, permet à la formulation de subir des contraintes de cisaillement, telles que celles rencontrées lorsque que la formulation est servie avec une cuiller ou étalée par exemple, sans se déstabiliser, sans que les gouttelettes formées ne se rompent, évitant ainsi alors une coalescence de la formulation.

Les mesures rhéologiques de viscosité en écoulement sont mesurées au moyen de rhéomètre à contrainte imposée ou à gradient de cisaillement imposé, ou plus simplement, au moyen d'un viscosimètre Brookfield.

La rhéologie en écoulement permet d'évaluer le seuil d'écoulement de la formulation qui représente la force à fournir pour détruire la structure du milieu et le forcer à s'écouler. La rhéologie en écoulement permet également de quantifier la facilité d'une formulation à s'écouler lorsque le cisaillement imposé augmente (comportement rhéofluifidiant) ainsi que le niveau de viscosité à un gradient de cisaillement donné.

Ces données de rhéologie en écoulement sont représentatives du comportement de la formulation lors de sa mastication, lors de son transvasement, de son foisonnement, etc.

Les mesures d'élasticité sont effectuées en régime dynamique à l'aide d'un rhéomètre permettant de fonctionner en oscillations. On peut donc déterminer les valeurs de G', module de conservation (ou module élastique), et G", module de perte (ou visqueux), ainsi que le domaine de déformation dans lequel les modules ne varient pas. Il est à noter qu'en général, le comportement est linéaire aux faibles déformations.

Ces caractéristiques rhéologiques ont comme objectif de mettre en évidence le comportement viscoélastique des formulations et de les comparer entre elles.

Les microfibrilles associées, sous forme sèche, mises en oeuvre dans le cadre de la présente invention confèrent un profil rhéologique particulier aux formulations alimentaires, de type rhéofluidifiant. Ce type de comportement rhéologique a pour conséquence d'entraîner une baisse de la viscosité de la formulation qui le contient lorsque celle-ci est soumise à des contraintes de cisaillement, que ce soit lors de la préparation de la formulation mais aussi lors de la consommation de cette dernière. Notons que cette baisse de viscosité en bouche permet en outre de favoriser la libération des arômes présents dans la formulation.

Les microfibrilles associées mises en oeuvre, sous forme sèche, présentent de très bonnes-propriétés d'agent de foisonnement. En effet, l'introduction des microfibrilles permet d'améliorer la stabilité du film séparant le gaz des autres ingrédients de la formulation, et de lui conférer une bonne élasticité.

A titre d'illustration, les formulations alimentaires comprenant les microfibrilles associées, séchées, présentent des valeurs élevées de module élastique G', par exemple comprises entre 1500 et 4000 Pa, mesurées à une fréquence de 1Hz, plus importantes que celles mesurées pour des formulations comprenant de la gomme xanthane ou de la gélatine.

Ainsi, les microfibrilles associées, sous forme sèches, peuvent valablement être employées comme additif dans des formulations destinées à être foisonnées, comme les crèmes fouettées, les crèmes chantilly, les nappages, les crèmes glacées. Les microfibrilles associées peuvent de même être employées dans des compositions comme les mayonnaises, les mousses de légumes, les mousses comprenant des protéines, telles que les mousses de viande, de poissons, les mousses comprenant de l'albumine, comme les meringues.

Par ailleurs, les microfibrilles associées confèrent aux formulations dans lesquelles elles sont utilisées une texture voisine de celle des formulations comprenant les additifs remplacés.

Un autre avantage des microfibrilles associées mises en oeuvre dans l'invention, est qu'elles peuvent, de manière avantageuse, remplacer plusieurs composés ordinairement employés dans des formulations alimentaires destinées à obtenir des produits foisonnés. Les formulations s'en trouvent d'autant simplifiées.

De plus, les microfibrilles de cellulose associées représentent un moyen de remplacer efficacement la gélatine animale, ce qui est un avantage supplémentaire au plan de l'hygiène. .

En outre, et cela représente un avantages supplémentaire, du fait qu'elles ne représentent qu'un faible apport calorique, elles peuvent valablement remplacer en tout ou en partie, les matières grasses, afin de préparer des compositions allégées.

Il est à noter que les microfibrilles de cellulose associées n'altèrent pas le goût des aliments dans lesquelles elles sont introduites.

On a pu même constater qu'elles avaient des propriétés d'exhausteur de goût.

Des exemples concrets mais non limitatifs de l'invention vont maintenant être présentés.

Dans les exemples qui vont suivre, les viscosités en écoulement ont été mesurées au moyen d'un viscosimètre Brookfield RVT 20-2, à température ambiante.

Elle est exprimée en mPa.s.

Les valeurs de modules élastiques ont été effectuées au moyen d'un rhéomètre CARRIMED CSL100 à contrainte imposée.

Elle ont été mesurées en régime dynamique : régime oscillatoire - fréquence de 0,01 à 10 Hz.

La plage de déformation (ou encore plateau élastique) est déterminée en effectuant un balayage en couple à une fréquence donnée et l'on détermine le domaine dans lequel les modules G' ne varient pas.

Les valeurs sont exprimées en Pa.

Les mesures des taux de foisonnement ont été réalisées de la façon suivante :
* Dans un bécher de volume (v) et de masse connus, on introduit de la mousse, on donne trois coups secs et l'on arase.
* On pèse le bécher pour déterminer la masse de mousse qu'elle contient (m).
* Le taux de foisonnement correspond au rapport suivant : [m(g) /v(ml)]x100.

Le taux de foisonnement est exprimé en %.

### EXEMPLE 1

Cet exemple a pour objet la préparation, sous forme sèche, de microfibrilles de cellulose (MFC) comprenant de la carboxyméthylcellulose (CMC).

La dispersion-mère de microfibrilles de cellulose est obtenue conformément au procédé décrit dans l'exemple 20 de la demande de brevet EP 726 356 ; elle comprend 2,3 % en microfibrilles de cellulose et est préhomogénéisée à l'Ultra-Turrax à 14000 tr/mn -1 mn pour 100 g de dispersion) ;

La carboxyméthylcellulose mise en oeuvre présente un degré de substitution égal à 1,2 ; de viscosité moyenne (produit BLANOSE 12M8P d'AQUALON).

La CMC est mise en solution dans de l'eau distillée puis ensuite ajoutée à la dispersion-mère de (MFC) et l'ensemble est agité à la pale défloculeuse à 1000 tr/mn pendant 30 mn.

La quantité de carboxyméthylcellulose ajoutée est 15 % par rapport au poids de CMC.

Le mélange est ensuite versé dans des coupelles puis séché dans une étuve ventilée à 40°C, jusqu'à un extrait sec de 77 %, contrôlé par dosage de l'eau à l'aide d'une thermobalance à infrarouge.

Le mélange séché est ensuite broyé au moulin à café, puis tamisé sur un tamis de 500 µm.

### EXEMPLE 2

Cet exemple a pour objet une formulation pour nappage.

On prépare deux formulations :
2.1 : selon l'invention (comprenant les MFC obtenues à l'exemple 1),
2.2 : caséïnate de sodium / l'alginate de sodium.

Les compositions des formulations sont les suivantes :

| **composants:** | **formulation 2.1** **(% poids)** | **formulation 2.2** **(% poids)** |
|---|---|---|
| 1) phase huileuse | | |
| Huile de palme hydrogénée | 7,6 | 7,6 |
| Ester acétique de monodiglycérides | 0,76 | 0,76 |
| Ester lactique de mono-diglycérides | 0,76 | 0,76 |

| 2) phase aqueuse | | |
|---|---|---|
| Sucre | 8,35 | 8,35 |
| Poudre de lait écrémé | 7,44 | 7,44 |
| Maltodextrine (Glucidex® 19) | 4,6 | 4,6 |
| Caséïnate de sodium | - | 1,5 |
| Alginate de sodium | - | 0,02 |
| MFC (exemple 1) | 1 | - |
| Eau | qsp 100 | qsp 100 |

(a) phase aqueuse :
   Dans un bécher équipé d'une pale défloculeuse, on pèse la quantité d'eau requise et l'on disperse sous vive agitation (500 tr/min) le mélange de poudres décrits dans le tableau ci-dessus. L'agitation est maintenue 5 minutes après l'introduction des poudres.
(b) phase huileuse :
   Dans un bêcher, on chauffe au bain-marie à 70°C la matière grasse et les émulsifiants.

On ajoute ensuite la phase huileuse à la phase aqueuse sous agitation à 1000tr/min. L'agitation est maintenue 5 minutes après l'introduction de la phase huileuse. Pendant cette opération, on compense l'évaporation de l'eau.

Le tout est ensuite homogénéisé à l'Ultra-turrax pendant 2 minutes à 20000 tr/min.

On refroidit le mélange à une température inférieure à 10°C avant de procéder au foisonnement. Celui-ci a lieu en utilisant un appareil Kenwood à vitesse maximale pendant 3 minutes à une température proche de 5°C.

Les résultats sont rassemblés dans le tableau suivant :

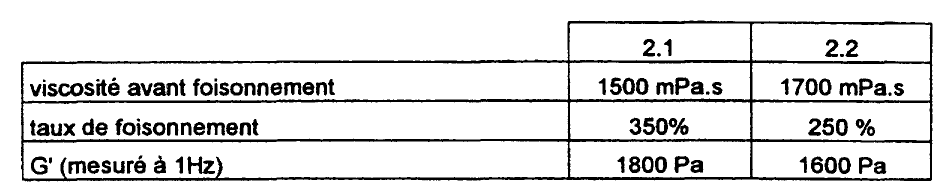

Ce tableau montre que la formulation selon l'invention est plus facile à faire foisonner du fait de sa viscosité légèrement plus faible.
En outre, la formulation selon l'invention est d'une part plus gélifiée (G' plus élevé à haute fréquence) et présente un taux de foisonnement amélioré.

## Revendications

1. Utilisation, sous forme sèche, d'une association de microfibrilles de cellulose essentiellement amorphes présentant un taux de cristallinité inférieur ou égal à 50 %, avec au moins un composé polyhydroxylé, comme agent de foisonnement pour des formulations alimentaires, la teneur en cette association étant supérieure à 0 % et inférieure à 20 % en poids par rapport au poids total de la formulation alimentaire.

2. Utilisation selon la revendication précédente, **caractérisé en ce que** les microfibrilles sont chargées en surface en acides carboxyliques et en polysaccharides acides, seuls ou en mélanges,

3. Utilisation selon l'une quelconque des revendications précédentes, **caractérisée en ce que** les microfibrilles de cellulose sont issues de cellules constituées d'au moins environ 80% de parois primaires.

4. Utilisation selon l'une quelconque des revendications précédentes, **caractérisé en ce que** la teneur en composé polyhydroxylé est compris entre 5 et 50 % en poids par rapport au microfibrilles et audit composé polyhydroxylé, et de préférence compris entre 5 et 30 % en poids par rapport à la même référence.

5. Utilisation selon l'une quelconque des revendications précédentes, **caractérisé en ce que** le composé polyhydroxylé est choisi parmi les carbohydrates et leurs dérivés, et les polyols.

6. Utilisation selon la revendication précédente, **caractérisée en ce que** le composé polyhydroxylé est choisi parmi les monosaccharides linéaires ou cycliques en C₃-C₆, les oligosaccharides, les polysaccharides et leurs dérivés gras comme les sucroesters d'acides gras, les carbohydrates alcool et leurs mélanges.

7. Utilisation selon la revendication précédente, **caractérisée en ce que** le composé polyhydroxylé est au moins de la carboxyméthylcellulose.

8. Utilisation selon l'une des revendications 6 ou 7, **caractérisée en ce que** le composé polyhydroxylé est au moins un polysaccharide anionique, choisi parmi la gomme xanthane, les succinoglycanes, les carraghénanes, les alginates, seuls ou en mélange.

9. Utilisation selon l'une quelconque des revendications 6 à 8, **caractérisée en ce que** le composé polyhydroxylé est au moins un polysaccharide non ionique choisi parmi les galactomannannes, l'amidon et ses dérivés non ioniques, les dérivés non ioniques de la cellulose.

10. Utilisation selon l'une quelconque des revendications 6 à 9, **caractérisé en ce que** le composé polyhydroxylé est au moins choisi parmi le sorbitol, le saccharose.

11. Utilisation selon l'une quelconque des revendications précédentes, **caractérisée en ce que** les microfibrilles contiennent au moins un co-additif, choisi parmi:
- les composés de formule (R¹R²N)COA, formule dans laquelle R¹ ou R², identiques ou différents, représentent l'hydrogène ou un radical alkyle en C₁-C₁₀, de préférence en C₁-C₅, A représente l'hydrogène, un radical alkyle en C₁-C₁₀, de préférence en C₁-C₅, ou encore le groupement R'¹R'²N avec R'¹, R'², identiques ou différents, représentant l'hydrogène ou un radical alkyle en C₁-C₁₀, de préférence en C₁-C₅.

12. Utilisation selon l'une quelconque des revendications précédentes, **caractérisée en ce que** la quantité de microfibrilles de cellulose associées à au moins un composé polyhydroxylé, éventuellement à au moins un co-additif, sous forme sèche, est comprise entre 0,01 et 5 % en poids par rapport au poids total de la formulation alimentaire.

## Claims

1. Use, in the dry form, of an association of essentially amorphous cellulose microfibrils with a degree of crystallinity of 50% or less, with at least one polyhydroxylated compound, as a bulking agent for food formulations, the proportion of this association being more than 0% and less than 20% by weight with respect to the total weight of the food formulation.

2. Use according to the preceding claim, **characterized in that** the microfibrils are surface charged with carboxylic acids and acid polysaccharides, used alone or as a mixture.

3. Use according to any one of the preceding claims, **characterized in that** the cellulose microfibrils are derived from cells constituted by at least about 80% primary walls.

4. Use according to any one of the preceding claims, **characterized in that** the amount of polyhydroxylated compound is in the range 5% to 50% by weight with respect to the microfibrils and to said polyhydroxylated compound, and preferably in the range 5% to 30% by weight with respect to the same reference.

5. Use according to any one of the preceding claims, **characterized in that** the polyhydroxylated compound is selected from carbohydrates and their derivatives and from polyols.

6. Use according to the preceding claim, **characterized in that** the polyhydroxylated compound is selected from linear or cyclic C₃-C₆ monosaccharides, from oligosaccharides, from polysaccharides and their fatty derivatives such as fatty acid sucroesters, from alcohol carbohydrates and from mixtures thereof.

7. Use according to the preceding claim, **characterized in that** the polyhydroxylated compound is at least carboxymethylcellulose.

8. Use according to claim 6 or claim 7, **characterized in that** the polyhydroxylated compound is at least one anionic polysaccharide selected from xanthan gum, succinoglycanes, carrageenans and alginates, used alone or as a mixture.

9. Use according to any one of claims 6 to 8, **characterized in that** the polyydroxylated compound is at least one non-ionic polysaccharide selected from galactomannans, from starch and its non-ionic derivatives, and from non-ionic cellulose derivatives.

10. Use according to any one of claims 6 to 9, **characterized in that** the polyhydroxylated compound is at least selected from sorbitol and saccharose.

11. Use according to any one of the preceding claims, **characterized in that** the microfibrils contain at least one co-additive, selected from:
• compounds with formula (R¹R²N)COA, in which formula R¹ or R², which may be identical or different, represent hydrogen or a C₁-C₁₀ alkyl radical, preferably C₁-C₅, A represents hydrogen, a C₁-C₁₀ alkyl radical, preferably C₁-C₅, or the group R'¹R'²N where R'¹, R'², which may be identical or different, represent hydrogen or a C₁-C₁₀ alkyl radical, preferably C₁-C₅.

12. Use according to any one of the preceding claims, **characterized in that** the quantity of cellulose microfibrils associated with at least one polyhydroxylated compound, and optionally with at least one co-additive, in the dry form, is in the range 0.01% to 5% by weight with respect to the total weight of the food formulation.

## Patentansprüche

1. Verwendung, in trockener Form, eines Verbunds von im Wesentlichen amorphen Mikrofibrillen aus Cellulose, welche einen Kristallinitätsgrad aufweisen, der kleiner oder gleich 50 % ist, mit wenigstens einer polyhydroxylierten Verbindung als Quellmittel für Nahrungsmittelzubereitungen, wobei der Gehalt dieses Verbunds über 0 % und unter 20 Gew.-%, bezogen auf das Gesamtgewicht der Nahrungsmittelzubereitung, beträgt.

2. Verwendung nach dem vorhergehenden Anspruch, **dadurch gekennzeichnet, dass** die Monofibrillen auf der Oberfläche mit Carbonsäuren und mit sauren Polysacchariden, allein oder in einer Mischung, geladen sind.

3. Verwendung nach irgendeinem der vorhergehenden Ansprüche, **dadurch gekennzeichnet, dass** die Mikrofibrillen aus Cellulose aus Zellen stammen, die zu wenigstens ca. 80 % aus primären Wänden bestehen.

4. Verwendung nach irgendeinem der vorhergehenden Ansprüche, **dadurch gekennzeichnet, dass** der Gehalt der polyhydroxylierten Verbindung zwischen 5 und 50 Gew.-%, bezogen auf die Mikrofibrillen und auf die genannte polyhydroxylierte Verbindung, und vorzugsweise zwischen 5 und 30 Gew.-%, bezogen auf dieselbe Referenz, liegt.

5. Verwendung nach irgendeinem der vorhergehenden Ansprüche, **dadurch gekennzeichnet, dass** die polyhydroxylierte Verbindung aus den Kohlenhydraten und deren Derivaten und den Polyolen ausgewählt wird.

6. Verwendung nach dem vorhergehenden Anspruch, **dadurch gekennzeichnet, dass** die polyhydroxylierte Verbindung aus den linearen oder cyclischen C₃-C₆-Monosacchariden, den Oligosacchariden, den Polysacchariden und deren Fettderivaten wie den Fettsäurezuckerestern, den Kohlenhydratalkoholen und deren Mischungen ausgewählt wird.

7. Verwendung nach dem vorhergehenden Anspruch, **dadurch gekennzeichnet, dass** die polyhydroxylierte Verbindung wenigstens eine Carboxymethylcellulose ist.

8. Verwendung nach einem der Ansprüche 6 oder 7, **dadurch gekennzeichnet, dass** die polyhydroxylierte Verbindung wenigstens ein anionisches Polysaccharid ist, das aus Xanthangummi, den Succinoglycanen, den Carragheenen, den Alginaten, allein oder in einer Mischung, ausgewählt wird.

9. Verwendung nach irgendeinem der Ansprüche 6 bis 8, **dadurch gekennzeichnet, dass** die polyhydroxylierte Verbindung wenigstens ein nichtionisches Polysaccharid ist, das aus den Galactomannanen, Stärke und deren nichtionischen Derivaten, den nichtionischen Derivaten der Cellulose ausgewählt wird.

10. Verwendung nach irgendeinem der Ansprüche 6 bis 9, **dadurch gekennzeichnet, dass** die polyhydroxylierte Verbindung wenigstens aus Sorbitol und Saccharose ausgewählt wird.

11. Verwendung nach irgendeinem der vorhergehenden Ansprüche, **dadurch gekennzeichnet, dass** die Mikrofibrillen wenigstens ein Koadditiv enthalten, das ausgewählt wird aus:
- den Verbindungen der Formel (R¹R²N)COA, in welcher R¹ oder R², die gleich oder verschieden sein können, für Wasserstoff oder eine C₁-C₁₀-Alkylgruppe, vorzugsweise mit C₁-C₅, stehen, A für Wasserstoff, eine C₁-C₁₀-Alkylgruppe, vorzugsweise mit C₁-C₅, oder die Gruppe R'¹R'²N steht, wobei R'¹, R'², die gleich oder verschieden sein können, für Wasserstoff oder eine C₁-C₁₀-Alkylgruppe, vorzugsweise mit C₁-C₅, stehen.

12. Verwendung nach irgendeinem der vorhergehenden Ansprüche, **dadurch gekennzeichnet, dass** die Menge der Mikrofibrillen aus Cellulose, die mit wenigstens einer polyhydroxylierten Verbindung, gegebenenfalls mit wenigstens einem Koadditiv, in trockener Form, verbunden sind, zwischen 0,01 und 5 Gew.-%, bezogen auf das Gesamtgewicht der Nahrungsmittelzubereitung, liegt.
